Europäisches Patentamt

European Patent Office

Office européen des brevets

(11) Veröffentlichungsnummer: **0 442 272 A2**

## EUROPÄISCHE PATENTANMELDUNG

(21) Anmeldenummer: **91100448.9**

(22) Anmeldetag: **16.01.91**

(51) Int. Cl.5: **C08G 18/42, C08G 18/61, C08G 18/80, C09D 175/06**

(30) Priorität: **15.02.90 DE 4004628**

(43) Veröffentlichungstag der Anmeldung:
**21.08.91 Patentblatt 91/34**

(84) Benannte Vertragsstaaten:
**AT BE CH DE DK ES FR GB GR IT LI LU NL SE**

(71) Anmelder: **Beutelrock, Carolin**
**Untertrave 105**
**W-2400 Lübeck(DE)**

(72) Erfinder: **Beutelrock, Friedrich Volker**
**Stolpmünderstrasse 9**
**W-2000 Hamburg 73(DE)**

(74) Vertreter: **Weber, Dieter, Dr. et al**
**Dr. Dieter Weber, Dipl.-Phys., Klaus Seiffert,**
**Dr. Winfried Lieke, Patentanwälte,**
**Gustav-Freytag-Strasse 25**
**W-6200 Wiesbaden 1(DE)**

(54) **Mittel zum lackabweisenden Beschichten von Substraten.**

(57) Mittel zur lackabweisenden Beschichten von Substraten, die eine leichte Lackentfernung gestatten, ohne danach erneut aufgebracht werden zu müssen, sind dadurch gekennzeichnet, daß sie

a) einen hydroxylgruppenhaltigen verzweigten gesättigten Polyester mit einer Hydroxylzahl (mg KOH/g Festharz) von 180 bis 320, mit einem Hydroxylgehalt, bezogen auf Festharz, von 6 bis 10 % und mit einer Säurezahl von maximal 6,

b) wenigstens ein Polyisocyanat,

c) ein polysiloxanmodifiziertes Polyisocyanat,

d) einen Härungskatalysator für Polyurethane und

e) wenigstens ein organisches Lösungsmittel enthalten.

EP 0 442 272 A2

In vielen Städten, insbesondere in Großstädten, treten in zunehmendem Maße auf öffentlichen und privaten Bauwerken sowie Fahrzeugen, insbesondere Eisenbahn- und Untergrundbahnwagen, Lackbesprühungen, sogenanne "Grafitti", auf. Obwohl die Grafitti sich einerseits zu einer selbständigen Kunstform entwickelt haben und vielfach zur optischen Gestaltung trister urbaner Betonlandschaften erwünscht sind, finden sich andererseits in den Städten überwiegend kunstlose Schmierereien sowie politische und soziale Parolen, die als Beschmutzung des Stadtbildes empfunden werden. Zur Entfernung solcher Lackbesprühungen aus Sprühdosen müssen die öffentliche Hand und private Hausbesitzer jährlich große Summen aufwenden, um Bauwerke und Eisenbahn- und Untergrundbahnwagen in den ursprünglichen Zustand zu versetzen, wobei durch das Eindringen der Sprühlacke in Oberflächenporen an Bauwerken oftmals sogar unreparierbare Schäden entstehen, die nur durch kostspielige Anstriche beseitigt werden können, durch die ihrerseits der optische Eindruck eines Gebäudes vielfach leidet.

Als prophylaktische Maßnahme gegen solche Verschmutzungen sind bereits Beschichtungsmittel auf Wachsbasis bekannt, die beispielsweise in den unteren Bereichen von Gebäuden, die besonders grafittigefährdet sind, aufgebracht werden. Solche Beschichtungen sind in gewissem Maße lackabweisend und lassen sich mit Lackbesprühungen zusammen durch Wasserdampf entfernen, der die Beschichtung erweicht und vom Untergrund löst. Nachteilig bei solchen Beschichtungsmitteln auf Wachsbasis ist insbesondere die Tatsache, daß die Beschichtungen nach der Grafittientfernung immer wieder erneuert werden müssen, was eine kostenaufwendige Angelegenheit ist.

Die der Erfindung zugrundeliegende Aufgabe bestand somit darin, ein verbessertes Mittel zum lackabweisenden Beschichten von Substraten zu bekommen, das eine möglichst leichte Entfernung von Lackbesprühungen gestattet, ohne danach erneut auf dem Substrat aufgebracht werden zu müssen. Diese Aufgabe wird mit dem erfindungsgemäßen Mittel gelöst.

Dieses erfndungsgemäße Mittel zum lackabweisenden Beschichten von Substraten ist dadurch gekennzeichnet, daß es

a) einen hydroxylgruppenhaltigen verzweigten gesättigten Polyester mit einer Hydroxylzahl (mg KOH/g Festharz) von 180 bis 320, mit einem Hydroxylgehalt, bezogen auf Festharz, von 6 bis 10 % und mit einer Säurezahl von maximal 6,

b) wenigstens ein Polyisocyanat,

c) ein polysiloxanmodifiziertes Polyisocyanat,

d) einen Härtungskatalysator für Polyurethane und

e) wenigstens ein organisches Lösungsmittel

enthält.

Aus den erfindungsgemäßen Mitteln entstehen Polyurethane, wobei der überraschende Effekt der leichten Entfernbarkeit von Farbbesprühungen insbesondere auf die Kombination der Komponenten a) und c) zurückzuführen ist. Die aus dem erfindungsgemäßen Mittel entstehenden modifizierten Polyurethane haften fest und dauerhaft auf dem Untergrund. Bei Besprühen mit Lackfarben bekommt man einen zweifachen Effekt. Einerseits nimmt der Untergrund die Lackfarben schlecht an und läßt die Farben teilweise koagulieren und auf der Oberfläche ablaufen, was die Sprayer von vornherein daran hindert, auf solche Oberflächen zu sprühen. Andererseits lassen sich von der Beschichtung Lackbesprühungen nach deren Trocknung leicht entfernen, ohne daß die Beschichtung selbst angegriffen oder gar mit entfernt wird.

Zweckmäßig liegt die Hydroxylzahl im Bereich von 210 bis 290, besonders im Bereich von 240 bis 280, der Hydroxylgehalt im Bereich von 7 bis 9 % und die Säurezahl bei maximal 4,5.

Um eine erhöhte Wasserdampfdurchlässigkeit der Beschichtung zu bekommen, was insbesondere bei Brückenbauten und Bauwerken des Tiefbaues von Bedeutung ist, die mit dem Grundwasser in Berührung kommen, ist es bevorzugt, einen Teil der Komponente a) durch einen hydroxylgruppenhaltigen verzweigten gesättigten Polyester mit einer Hydroxylzahl von 120 bis unter 180 und mit einem Hydroxylgehalt von 3 bis unter 6 % und/oder durch einen hydroxylgruppenhaltigen verzweigten gesättigen Polyether mit einem Hydroxylgehalt von 8 bis 14 % zu ersetzen. Zweckmäßig werden 10 bis 50 Gew.-% der Komponente a) durch den anderen Polyester oder den Polyether ersetzt, besonders bevorzugt 20 bis 40 Gew.-%. Durch den Zusatz eines solchen Polyesters mit geringerem Hydroxylgehalt oder eines Polyethers mit einem Hydroxylgehalt in dem genannten Bereich wird die Entfernbarkeit der Farbbesprühungen praktisch nicht oder kaum beeinträchtigt, während die Wasserdampfdurchlässigkeit wesentlich erhöht wird.

Wenn diese Zusatzkomponente ein Polyester ist, liegt dessen Hydroxylzahl bevorzugt bei 150 bis 170 und sein Hydroxylgehalt vorzugsweise bei 4 bis 5,5 %. Bei dem Polyether liegt der Hydroxylgehalt vorzugsweise bei 10 bis 12 %. Wenn in der Beschreibung und den Ansprüchen im Zusammenhang mit dem Hydroxylgehalt von Prozenten die Rede ist, sind damit Gewichtsprozente, bezogen auf den Feststoffgehalt des jeweiligen Polyesters oder Polyethers gemeint.

Als Komponente b) können grundsätzlich alle für Polyurethane üblichen Polyisocyanate, insbesondere Diisocyanate, aber auch Tri- und Tetraisocyanate oder Vorpolymere hiervon verwendet werden. Die Polyisocyanate können aromatischer, aromatischaliphatischer, aliphatischer oder cycloaliphatischer Natur sein. Da die erfindungsgemäßen Mittel aber im Regelfall im Freien eingesetzt werden und aromatische Polyisocyanate Beschichtungen mit mangelhafter Wetterbeständigkeit ergeben, ist es bevorzugt, in den erfindungsgemäßen Mitteln aliphatische Polyisocyanate, insbesondere Diisocyanate, oder deren Vorpolymere zu benutzen.

Gegebenenfalls kommen auch übliche geblockte Polyisocyanate in Betracht. Diese sind handelsübliche Verbindungen, die zur Blockung der Isocyanatgruppen beispielsweise mit einem Alkohol, mit Caprolactam, mit einem Phenol oder mit einem Glycol umgesetzt sein können. Geblockte Polyisocyanate kommen insbesondere dann in Betracht, wenn das erfindungsgemäße Mittel die Komponenten a) bis e) in einheitlichem Gemisch miteinander enthält. Bei ungeblocktem Polyisocyanat ist es zweckmäßig, das Mittel als zwei Komponenten zu packen und zu lagern, wobei in der einen Packung die Komponente a) und in der anderen die Komponenten b) und c) enthalten sind.

Die Komponente c) ist ein polysiloxanmodifiziertes Polyisocyanat und kann wiederum ein Di-, Tri- oder Tetraisocyanat sein, ist aber vorzugsweise ein Diisocyanat und insbesondere ein solches aliphatischer Natur. Dieses wird in das Polyurethan einpolymerisiert, so daß die Polysiloxanmodifizierung in dem Polyurethanpolymer fixiert wird. Es kommen auch feuchtigkeitshärtende Systeme in Betracht, die bei Ausschluß von Feuchtigkeit lagerbeständig sind und erst bei Einwirkung von Luftfeuchtigkeit aushärten.

Die Komponente d) besteht aus einem üblichen Härtungskatalysator für die Herstellung von Polyurethanen. Solche Härtungskatalysatoren sind beispielsweise und insbesondere tertiäre Amine, quartäre Ammoniumsalze und Esteramine sowie verschiedene Metallverbindungen, wie Zinkoctoat oder Dibutylzinndilaurat.

Das organische Lösungsmittel wird in solcher Menge zugesetzt, wie man sie für eine leichte Handhabung benötigt. Vielfach sind die Einzelkomponenten in Lösungsmitteln enthalten, so daß mit den Einzelkomponenten solche Lösungsmittel automatisch in die erfindungsgemäßen Mittel gelangen. Bei der Lagerung in zwei getrennten Behältnissen enthalten beide zweckmäßig ein organisches Lösungsmittel. In Betracht kommen im Grunde alle organischen Lösungsmittel, die sich inert gegenüber der Polyesterkomponente und der Polyisocyanatkomponenten verhalten. Bevorzugt sind Aromaten, wie Xylole, Solventnaphtha oder dergleichen und/oder Ester, wie Butylacetat, Methoxypropylacetat, Ethoxyethylacetat oder Ethylglycolacetat und Ketone, wie Methylisobutylketon oder Methylethylketon.

Besonders günstige lackabweisende Wirkung bekommt man, wenn man zusätzlich zu den Komponenten a) bis e) als Komponente f) ein polyestermodifiziertes hydroxyfunktionelles Polysiloxan, vorzugsweise ein polyestermodifiziertes hydroxyfunktionelles Polydimethylsiloxan einarbeitet. Dieses wird zweckmäßig in einer Menge von 0,5 bis 5, vorzugsweise 1 bis 3 Gewichtsteile je 100 Gewichtsteile der Komponente a) zugemischt.

Weiterhin können die erfindungsgemäßen Mittel weitere Zusatzstoffe enthalten, die in Beschichtungsmitteln üblich sind, wie Verlaufmittel, Pigmente, Farbstoffe, UV-Absorber oder dergleichen, soweit diese Stoffe die erwünschten Eigenschaften des Mittels nicht beeinträchtigen.

Die optimale gewichtsmäßige Zusammensetzung kann durch Reihenversuche ermittelt werden. Zweckmäßig ist es, daß das Mittel je 10 Gewichtsteile der Komponente a) 50 bis 120, vorzugsweise 60 bis 90 Gewichtsteile der Komponente b), 0,5 bis 5, vorzugsweise 1 bis 3 Gewichtsteile der Komponente c) und 0,01 bis 1, vorzugsweise 0,1 bis 0,5 Gewichtsteile der Komponente d) enthält. Insgesamt enthält das erfindungsgemäße Mittel unabhängig davon, ob es als einheitliches Gemisch oder in zwei getrennten Behältnissen vorliegt, zweckmäßig je 100 Gewichtsteile der Komponente a) 50 bis 500, vorzgusweise 100 bis 250, besonders 140 bis 180 Gewichtsteile der Komponente e).

Die erfindungsgemäßen Mittel können auf den Substraten in unterschiedlicher Weise aufgebracht werden, wie beispielsweise durch Aufsprühen, Aufbürsten, Aufwalzen oder in sonstiger üblicher Weise.

**Beispiel 1**

**Komponente A**

Hydroxylgruppenhaltiger, stark verzweigter gesättigter Polyester mit einer Hydroxylzahl (mg KOH/g Festharz) von etwa 265,
einem Hydroxylgehalt (bezogen auf das Gewicht des Festharzes) von etwa 8 % und
einer Säurezahl (mg KOH/g Festharz) von
maximal 4 als 65 %ige Lösung in Methoxy-

| | |
|---|---|
| propylacetat | 65,00 Gewichtsteile |
| Xylol | 17,63 Gewichtsteile |
| Methoxypropylacetat | 15,00 Gewichtsteile |
| handelsüblicher Katalysator für die Polyurethanherstellung | 0,13 Gewichtsteile |
| Verlaufmittel | 0,24 Gewichtsteile |
| polyestermodifiziertes hydroxy- funktionelles Polydimethylsiloxan | 1,00 Gewichtsteil |
| UV-Absorber | 1,00 Gewichtsteil |

**Komponente B**

| | |
|---|---|
| Vorpolymer von aliphatischem unmodifi- ziertem Diisocyanat | 97,00 Gewichtsteile |
| polysiloxanmodifiziertes Polyisocyanat | 3,00 Gewichtsteile |

Die Komponenten A und B wurden im Gewichtsverhältnis 2 : 1 miteinander vermischt und als Beschichtung auf Beton aufgetragen. Nach dem Aushärten wurden aus handelsüblichen Sprühdosen Lackfarben aufgesprüht. Diese wurden von der Beschichtung schlecht angenommen und liefen teilweise ab. Nach dem Trocknen konnten die Lackbeschichtungen mit üblichen Reinigungsmitteln leicht und vollständig entfernt werden.

**Beispiel 2**

In der Rezeptur des Beispiels 1 wurden in der Komponente A 30 Gew.-% der 65 %igen Lösung von hydroxylgruppenhaltigem stark verzweigtem gesättigtem Polyester durch eine 75 %ige Lösung eines hydroxylgruppenhaltigen stark verzweigten gesättigten Polyesters, der mit einer niedermolekularen Fettsäure modifiziert war, in Xylol ersetzt. Dieser Polyester hatte eine Hydroxylzahl von etwa 165, einen Hydroxylgehalt von etwa 5 % und eine Säurezahl von etwa 15. Die mit diesem Mittel erhaltenen Beschichtungen zeichneten sich durch erhöhte Wasserdampfdurchlässigkeit aus.

**Beispiel 3**

Die Rezeptur des Beispiels 1 wurde mit der Abwandlung wiederholt, daß 20 % der 65 %igen Lösung des hydroxylgruppenhaltigen verzweigten gesättigten Polyesters durch einen lösungsmittelfreien hydroxylgruppenhaltigen verzweigten Polyether mit einem Hydroxylgehalt von etwa 11,5 %, einem Äquivalentgewicht von etwa 148, einer Säurezahl von weniger als 0,5 und einer Dichte bei 20 °C nach DIN 51757 von 1,03 g/cm³ ersetzt wurden.

Das Mittel ergab einen lackabweisende Beschichtung mit etwa den gleichen Lackabweisungseigenschaften wie die Beschichtungen der Beispiele 1 und 2, jedoch mit einer Wasserdampfdurchlässigkeit, die derjenigen des Beispiels 1 überlegen war.

**Patentansprüche**

1. Mittel zum lackabweisenden Beschichten von Substraten, **dadurch gekennzeichnet, daß es**

   a) einen hydroxylgruppenhaltigen verzweigten gesättigten Polyester mit einer Hydroxylzahl (mg KOH/g Festharz) von 180 bis 320, mit einem Hydroxylgehalt, bezogen auf Festharz, von 6 bis 10 % und mit einer Säurezahl von maximal 6,

   b) wenigstens ein Polyisocyanat,

   c) ein polysiloxanmodifiziertes Polyisocyanat,

   d) einen Härungskatalysator für Polyurethane und

   e) wenigstens ein organisches Lösungsmittel

   enthält.

2. Mittel nach Anspruch 1, **dadurch gekennzeichnet, daß** es anstelle eines Teils der Komponente a), vorzugsweise anstelle von 10 bis 50 Gew.-% der Komponente a), eine entsprechende Menge eines hydroxylgruppenhaltigen verzweigten gesättigten Polyesters mit einer Hydroxylzahl von 120 bis unter 180, vorzugsweise von 150 bis 170, und mit einem Hydroxylgehalt von 3 bis unter 6 %, vorzugsweise von 4 bis 5,5 % und/oder eines hydroxylgruppenhaltigen verzweigten gesättigten Polyethers mit einem Hydroxylgehalt von 8 bis 14, vorzugsweise 10 bis 12 %, enthält.

3. Mittel nach Anspruch 1 oder 2, **dadurch gekennzeichnet, daß** es zusätzlich f) ein polyestermodifiziertes hydroxyfunktionelles Polysiloxan, vorzugsweise Polydimethylsiloxan enthält.

4. Mittel nach einem der Ansprüche 1 bis 3, **dadurch gekennzeichnet, daß** es zusätzlich ein Verlaufmittel enthält.

5. Mittel nach einem der Ansprüche 1 bis 4, **dadurch gekennzeichnet, daß** es als Komponente a) einen hydroxylgruppenhaltigen verzweigten gesättigten Polyester mit einer Hydroxylzahl von 210 bis 290, vorzugsweise 240 bis 280, mit einem Hydroxylgehalt von 7 bis 9 % und mit einer Säurezahl von maximal 4,5 enthält.

6. Mittel nach einem der Ansprüche 1 bis 5, **dadurch gekennzeichnet, daß** es je 100 Gewichtsteile der Komponente a), 50 bis 120, vorzugsweise 60 bis 90 Gewichtsteile der Komponente b), 0,5 bis 5, vorzugsweise 1 bis 3 Gewichtsteile der Komponente c) und 0,01 bis 1, vorzugsweise 0,1 bis 0,5 Gewichtsteile der Komponente d) enthält.

7. Mittel nach einem der Ansprüche 1 bis 6, **dadurch gekennzeichnet, daß** es je 100 Gewichtsteile der Komponente a) und 100 bis 250, vorzugsweise 140 bis 180 Gewichtsteile der Komponente e) enthält.

8. Mittel nach einem der Ansprüche 3 bis 7, **dadurch gekennzeichnet, daß** es je 100 Gewichtsteile der Komponente a) und 0,5 bis 5, vorzugsweise 1 bis 3 Gewichtsteile der Komponente f) enhält.